# EUROPÄISCHE PATENTSCHRIFT

(11) **EP 2 590 769 B1**
(45) Veröffentlichungstag und Bekanntmachung des Hinweises auf die Patenterteilung: **22.11.2017**
(21) Anmeldenummer: 11821144.0
(22) Anmeldetag: 05.07.2011
(51) Int. Cl.: B23B 31/00, B23B 31/113, F16D 1/108

(54) **MODULARE SCHNITTSTELLE FÜR WERKZEUGE**
MODULAR INTERFACE FOR TOOLS
INTERFACE MODULAIRE POUR OUTILS

(30) Priorität: 05.07.2010 DE 102010026129
(43) Veröffentlichungstag der Anmeldung: 15.05.2013
(73) Patentinhaber: Benz GmbH, Werkzeugsysteme, 77716 Haslach (DE)
(72) Erfinder: GEISSELMANN, Thomas, 77716 Fischerbach (DE)
(74) Vertreter: Thämer, Wolfgang
(86) Internationale Anmeldenummer: PCT/DE2011/001572
(87) Internationale Veröffentlichungsnummer: WO 2012/028135

(56) Entgegenhaltungen:
- EP-B1- 1 768 808
- DE-A1- 1 948 452
- FR-A- 1 007 956

## Beschreibung

Die Erfindung betrifft eine Schnittstelle gemäß dem Oberbegriff des Anspruchs 1. Eine solche Schnittstelle ist beispielsweise aus der EP 1 768 808 B1 bekannt. Aus der EP 1 768 808 B1 ist nämlich ein Werkzeugadapter zur lösbaren und austauschbaren Befestigung in einer werkzeugaufnahme einer Werkzeugmaschine bekannt. Der werkzeugadapter besteht u.a. aus einem Kegelabschnitt und einem zylindrischen Bund. Im zylindrischen Bund befinden sich zwei einander gegenüberliegende kegelstumpfartige Querbohrungen, in die in die Werkzeugaufnahme einzuschraubende Spannbolzen mit ihren kegelstumpfartigen Spitzen eingeschraubt werden. Durch das Einschrauben der Spannbolzen wird der Werkzeugadapter gegen den zylindrischen Bund gespannt. Bei einem Wechsel des Werkzeugadapters kann es zu Verspannungen kommen, da die Spannbolzen nur nacheinander angezogen werden können. Auch müssen beide Spannbolzen beim werkzeugadapterwechsel so weit herausgeschraubt werden, dass die Gefahr besteht, dass sie herausfallen.

Ferner ist aus der DE 1 948 452 A1 und der FR 1 007 956 A jeweils eine Werkzeugschnittstelle bekannt, bei der das Werkzeug an einem Hintergriff mittels einer hohlen Spannschraube längs der Spannfutterrotationsachse gespannt wird. Die Spannschraube wird im Spannfutter über ein Kegelradgetriebe um die zitierte Rotationsachse in Rotation versetzt.

Der vorliegenden Erfindung liegt das Problem zugrunde, eine Schnittstelle aus einer ersten Baugruppe und einer zweiten Baugruppe zu entwickeln, die bei jedem Werkzeugwechsel eine einfache Handhabung bei einer hohen Wiederholgenauigkeit bezüglich der Position der zweiten Baugruppe gegenüber der ersten Baugruppe gewährleistet.

Das Problem wird mit den Merkmalen des Anspruchs 1 gelöst. In der Ausnehmung der ersten Baugruppe ist ein Schalthebelelement längsverschiebbar oder um eine von der Mittellinie der kegelstumpfmantelförmigen Ausnehmung abweichende Schwenkachse schwenkbar angeordnet. Die erste Baugruppe weist zur Lagerung des Schalthebelelements mindestens zwei Zapfen auf, wobei mindestens ein Zapfen - exzentrisch gelagert - schwenkbewegbar ist. Das Schalthebelelement hat mindestens ein - die zweite Baugruppe anlenkendes - Anlenkelement. Die zweite Baugruppe hat mindestens ein Hintergriffselement, das durch eine Schwenkbewegung der zweiten Baugruppe hinter das Anlenkelement des Schalthebelelements bringbar ist.

Mit der Erfindung wird eine zweite Baugruppe gegenüber einer ersten Baugruppe verdrehsicher positioniert und wiederholgenau eingespannt. Dazu ist zwischen beiden - eine Schnittstelle bildende - Baugruppen als Zwischenelement ein Schalthebelelement eingebaut. Das Schalthebelelement ist in der ersten Baugruppe schwenk- und/oder längsverschiebbar gelagert. Es weist als Anlenkelemente für die zweite Baugruppe z.B. mehrere Innenstege auf. Die zweite Baugruppe hat entsprechende stegartige Hintergriffselemente. Letztere hintergreifen beim Einsetzen der zweiten Baugruppe in die erste die Anlenkelemente des Schalthebelelements. Das Hintergreifen der Anlenkelemente durch die Hintergriffelemente kann mit dem Hintergreifen eines herkömmlichen Bajonettverschlusses verglichen werden.

In den Ausführungsbeispielen ist die erste Baugruppe ein rotierender Spindelkopf eines Werkzeugwechselaggregats. Die zweite Baugruppe stellt einen werkzeugtragenden Werkzeughalter dar. Selbstverständlich kann die erste Baugruppe auch ein nicht rotierender Werkzeugträger sein, wie er als Stahlhalter eines Oberschlittens einer konventionellen Drehmaschine verwendet wird. Die zweite Baugruppe ist in diesem Fall der in einem Werkzeughalter angeordnete Drehstahl als Werkzeug oder Schneidenträger.

Weitere Einzelheiten der Erfindung ergeben sich aus den Unteransprüchen und den nachfolgenden Beschreibungen von schematisch dargestellten Ausführungsformen.
- Figur 1:: Perspektivische Ansicht einer Schnittstelle aus einem Spindelkopf und einem Werkzeughalter;
- Figur 2:: Perspektivische Rückansicht eines Schalthebelelements;
- Figur 3:: Perspektivische Vorderansicht des Schalthebelelements;
- Figur 4:: Längsschnitt zu Figur 1;
- Figur 5:: Teillängsschnitt zu Figur 1 bei gelüfteten Montagefugen;
- Figur 6:: wie Figur 5, jedoch ohne Werkzeughalter;
- Figur 7:: Längsschnitt zu Figur 1, jedoch um 90 Winkelgrade im Uhrzeigersinn geschwenkt gegenüber dem Längsschnitt nach Figur 4;
- Figur 8:: wie Figur 7, jedoch mit gelüfteten Montagefugen;
- Figur 9:: Explosionsdarstellung der Schnittstelle ohne Gehäuse und Werkzeug;
- Figur 10:: Explosionsdarstellung einer anderen Schnittstelle ohne Gehäuse, Werkzeughalter und Werkzeug;
- Figur 11:: Querschnitt der Exzenterwelle mit Schwenkanschlagstift;
- Figur 12:: Teillängsschnitt zu Figur 10, jedoch mit Werkzeughalter;
- Figur 13:: Längsschnitt des modifizierten Schalthebelelements nach Figur 11.

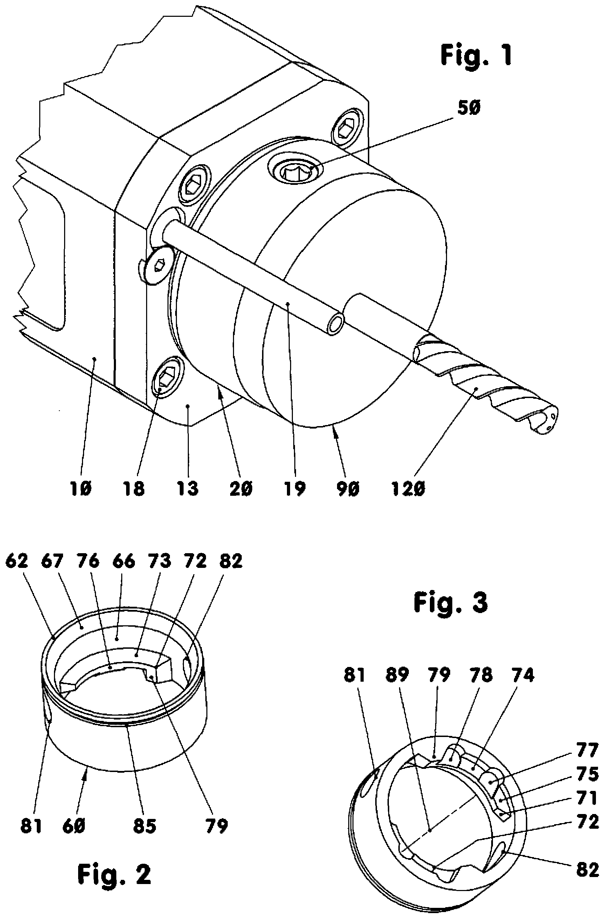

Die Figur 1 zeigt den vorderen Teil eines Werkzeugaggregats. Aus dessen Gehäuse (10) ragt ein Spindelkopf (20) als erste Baugruppe einer modularen Schnittstelle heraus. Im Spindelkopf (20) sitzt auswechselbar ein Werkzeughalter (90) als zweites Bauteil der modularen Schnittstelle. Der Werkzeughalter (90) trägt als Werkzeug (120) z.B. einen Spiralbohrer mit Innenkühlung. Im Vordergrund befindet sich ein im Deckel (13) des Gehäuses (10) schwenkbar gelagertes Endstück (19) einer externen Kühl- oder Schmiermittel zuführenden Leitung.

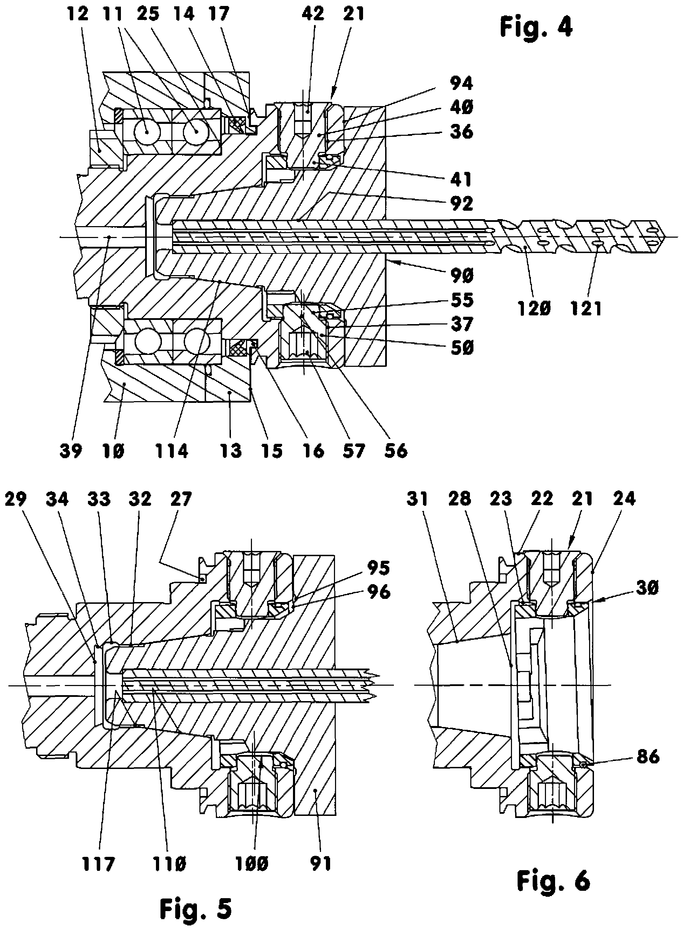

Nach Figur 4 lagern das Gehäuse (10) und der Deckel (13) das vordere Ende des Spindelkopfes (20) in zwei in einer in O-Anordnung angeordneten Schulterkugellagern (11). Die Außenringe der Schulterkugellager (11) sitzen axial fixiert zwischen dem Gehäuse (10) und dem Deckel (13). Die auf dem Spindelkopf (20) gelagerten Innenringe der Lager (11) sitzen axial verspannt zwischen einer Spindelkopfschulter (25) und einer auf dem Spindelkopf (20) aufgeschraubten Wellenmutter (12).

Der Deckel (13) des Gehäuses (10) weist an seiner Vorderseite seiner großteils planen Stirnfläche (15) einen Steg (16) auf, der in eine entsprechende Bundnut (27), vgl. Figur 5, des Spindelkopfes (20) axial hineinragt. Zwischen dem Steg (16) und der Bundnut (27), sowie zwischen der Stirnfläche (15) und der gegenüberliegenden Stirnfläche des Spindelkopfes (20) befindet sich ein Labyrinthspalt (17), der eine Spaltweite von z.B. 0,1 ... 0,2 mm hat. Hinter der Labyrinthdichtung ist eine Lippendichtung (14) angeordnet, deren den Spindelkopf (20) berührende Lippe in Richtung der Labyrinthdichtung weist.

Aus dem Spindelkopf (20) ragt vorn ein rohrförmiger Spanngetriebeabschnitt (21) aus dem Gehäuse (10) heraus. Dieser Spanngetriebeabschnitt (21), vg1. Figur 6, hat z.B. eine zylindrische Außenwandung (22), eine zylindrische Innenwandung (23) - als Teil einer einen Werkzeughalter (90) aufnehmenden Ausnehmung (30) - und eine z.B. plane Stirnfläche (24). Die Tiefe des Spanngetriebeabschnitts (21) beträgt bei einem Spindelkopf (30) mit z.B. 64 mm Außendurchmesser 20 mm, während seine Wandstärke z.B. 12 mm misst. Die Innenwandung (23) endet z.B. vor einer planen Innenstirnfläche (28), in der sich ein kegelstumpfmantelförmiger Abschnitt (31) anschließt. Dieser Abschnitt (31) hat hier z.B. einen Maximaldurchmesser von 25 mm und einen Kegelwinkel von 16 Winkelgraden. Die Länge dieses kegelstumpfförmigen Abschnitts (31) beträgt ca. 18 mm.

An den kegelstumpfförmigen Abschnitt (31) schließt sich eine zumindest bereichsweise zylindrische Bohrung (32) an. Sie endet vor einer weiteren Innenstirnfläche (29), in die eine Kühl- und/oder Schmiermittelzuführbohrung (35) mündet. Vor der Innenstirnfläche (29) endet die Bohrung (32) in einer kegelstumpfförmigen Hintergriffsaufweitung (34). Den größten Durchmesser hat diese Hintergriffsaufweitung (34) im Bereich der Innenstirnfläche (29). Im diese Aufweitung (34) kann ein Dichtring eingesetzt werden, der die Bohrungen (39, 92) gegeneinander abdichtet.

Zwischen der Hintergriffsaufweitung (34) und dem zylindrischen Teil der Bohrung (32) liegt eine zylindrische Hintergriffsaufweitung (33). Ihr maximaler Durchmesser ist z.B. 1 mm größer als der der Bohrung (32).

Der Spanngetriebeabschnitt (21) des Spindelkopfes (20) weist z.B. zwei einander gegenüberliegende Gewindebohrungen (36, 37) auf. Nach Figur 4 haben beide Gewindebohrungen (36, 37) z.B. das gleiche Feingewinde, z.B. M 12 x 1. In der oberen Gewindebohrung (36) ist eine Spezialsenkschraube (40) fest eingeschraubt. Der Senkkopf dieser Schraube (40) liegt verspannt an der Senkung der Gewindebohrung (36) an. Das andere Ende der Spezialsenkschraube (40) weist einen z.B. balligen, z.B. sphärisch gekrümmten Lagerzapfen (41) auf, der in die Ausnehmung (30) hineinragt. Der Durchmesser des Lagerzapfens (41) beträgt z.B. 8 mm.

In der unteren Gewindebohrung (37) ist nach Figur 4 eine Exzenterschraube (50) eingeschraubt. Sie hat einen in die Ausnehmung (30) hineinragenden Exzenterzapfen (55). Letzterer hat bei einem Durchmesser von z.B. 9 mm eine ebenfalls beispielsweise bereichsweise ballige, z.B. sphärisch gekrümmte Außenfläche. Die Exzentrizität des Exzenterzapfens (51) beträgt z.B. 0,55 ± 0,2 mm. Die Schwenkachse der Exzenterschraube (50) ist deren Mittellinie.

Die Werkzeugausnehmung (42) der Spezialsenkschraube (40) ist kleiner als die Werkzeugausnehmung (57) der Exzenterschraube (50).

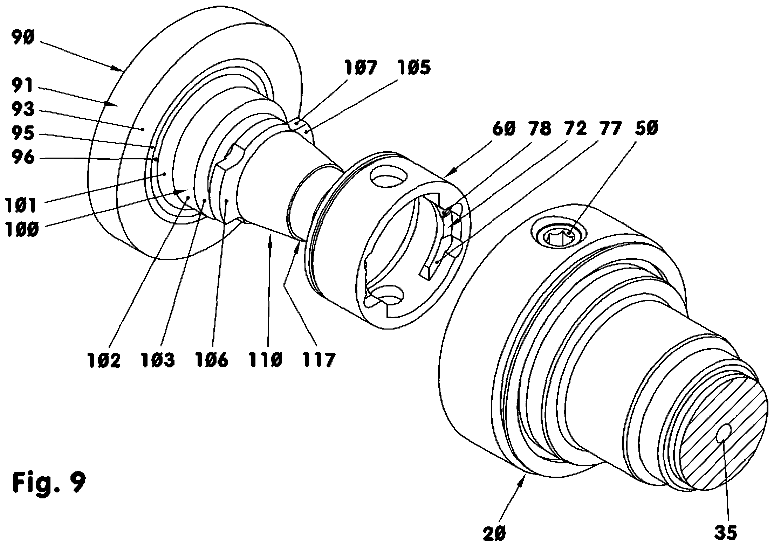

In der Ausnehmung (30) steckt nach Figur 4 der Werkzeughalter (90). Letzterer umfasst einen Flanschabschnitt (91), vgl. Figur 5, einen Verriegelungsabschnitt (100), einen Konusabschnitt (110) und einen Endabschnitt (117), vgl. auch Figur 9. Der z.B. nahezu scheibenförmige Flanschabschnitt (91) hat hier eine zylindrische Außenfläche, deren Durchmesser geringfügig kleiner ist als der benachbarte Außendurchmesser des Spindelkopfes (20). Vorn hat der Flanschabschnitt (91) z.B. eine plane Stirnfläche, in deren Mitte eine zylindrische Bohrung (92) zur Aufnahme des Werkzeugs (120) - z.B. mittels eines Querpresssitzes - angeordnet ist.

Die Rückseite des Flanschabschnittes (91) weist z.B. eine plane Stirnfläche (93) auf, die als Anlagefläche zur Kontaktierung des Spindelkopfes (20) dient. Die Stirnfläche (93) ist ggf. durch gerade oder ungerade Nuten in verschiedene Zonen aufgeteilt. Ggf. können die zueinander passend bearbeiteten Stirnflächen (24) und (93) kegelstumpfmantelförmig oder sphärisch gekrümmt ausgeführt sein. Der Kegelwinkel läge dann zwischen 170 und 190 Winkelgraden, während der Krümmungsradius größer 200 mm wäre.

Gegenüber dem Verriegelungsabschnitt (100) ist die Stirn- bzw. Anlagefläche (93) durch eine Umlaufringnut (95) abgetrennt. Innerhalb der Umlaufringnut (95) liegt eine plane Auswurffläche (96). Im Bereich der Auswurffläche (96) hat der Flanschabschnitt (91) z.B. eine geringfügig größere Wandstärke als im Bereich der Stirnfläche (93).

An die Auswurffläche (96) schließt sich eine 3,3 x 30°-Fase (101) an. Ihr folgt ein kurzer zylindrischer Abschnitt (102), der eine Ringnut (103) mit z.B. zylindrischem Nutgrund (104) aufweist. Der Nutgrund (104) hat z.B. einen Durchmesser von 26,4 mm. Flanschseitig hat die Ringnut (103) eine kegelstumpfmantelförmige Flanke, deren Flankenwinkel 30 Winkelgrade misst. Die gegenüberliegende Nutflanke hat z.B. eine ebene Flankenfläche.

Zwischen der Ringnut (103) und dem folgenden Konusabschnitt (110) bleiben im Ausführungsbeispiel z.B. zwei ca. 3,5 mm breite Hintergriffsstege (105, 106) stehen, die in Umfangsrichtung jeweils z.B. 60 Winkelgrade überdecken. Jeder Hintergriffssteg (105, 106) hat in Umfangsrichtung eine Seitenflanke (107), wobei die Seitenflanken (107) eines Hintergriffsstegs (105, 106) jeweils parallel zueinander ausgerichtet sind. Sie haben im Ausführungsbeispiel einen Abstand von 16 mm. Der maximale Durchmesser des Spindelkopfes (20) im Bereich der Hintergriffsstege (105, 106) beträgt 32,2 mm.

Ggf. kann der zylindrische Abschnitt (102) zwischen der Fase (101) und dem Nutgrund (104) durch einen Kegelstumpfmantel ersetzt werden.

Dem Verriegelungsabschnitt (100) ist der Konusabschnitt (110) nachgeschaltet. Letzterer kommt bei eingewechseltem Werkzeughalter (90) mit dem kegelstumpfmantelförmigen Abschnitt (31) des Spindelkopfes (20) in einen großflächigen Kontakt. Die Kontaktfläche wird als erste Montagefuge (114) definiert. Diese Montagefuge (114) kann auch die Form eines Zylindermantels haben. In der Schnittstelle liegt gleichzeitig die hintere Stirnfläche (93) des Werkzeughalters (90) an der vorderen Stirnfläche (24) des Spindelkopfes (20) ebenfalls z.B. großflächig an. Die dabei entstehende Kontaktfläche wird als zweite Montagefuge (94) bezeichnet.

Ggf. kann hier jeweils eine Anlagefläche auf eine oder mehrere punktuelle oder linienartige Kontaktstellen treffen. In diesem Fall hat beispielsweise der Spindelkopf (20) die plane Stirnfläche (24), während der Flanschabschnitt (91) des Werkzeughalters (90) z.B. eine einzelne Kontaktstelle aufweist. Selbstverständlich kann auch am Spindelkopf (20) die z.B. punktuelle Kontaktstelle und am Werkzeughalter (90) die vollflächige Stirnfläche (93) sein.

Der Endabschnitt (117) ist ein im Wesentlichen zylindrischer Abschnitt, der in einer 1,6 x 30°-Fase und einer daran anschließenden 0,4 x 60°-Fase endet. In radialer Richtung ist zwischen dem Endabschnitt (117) und der Bohrung (32) ein radiales Spiel von z.B. 0,5 mm.

Zwischen dem Spanngetriebeabschnitt (21) des Spindelkopfes (20) und dem Verriegelungsabschnitt (100) des Werkzeughalters (90) ist das z.B. einteilige Schalthebelelement (60) angeordnet. Das Schalthebelelement (60) ist ein Ring, vgl. Figuren 2 und 3, in dessen Bohrung (66) hier je zwei nach innen ragende Innenstege (71, 72) angeordnet sind. Die radiale Außenfläche des Schalthebelelements (60) hat eine zylindrische Form. Im vorderen Bereich, das ist der Bereich, der zum Werkzeughalter hin orientiert ist, ist in die Außenfläche eine Ringnut (85) zur Aufnahme eines O-Ringes (86) eingearbeitet. Das Schalthebelelement (60) hat dort eine plane oder eine kegelstumpfförmige Stirnfläche (62). Der Kegelwinkel beträgt z.B. 356 Winkelgrade.

Vorn ist die Bohrung (66) mit einer 3,6 x 30°-Fase (67) ausgestattet. Im hinteren Bereich der Bohrung (66) liegen die Innenstege (71, 72) achsensymmetrisch zur Schalthebelelement-Mittellinie (89). Die Vorderflanken (73) der Innenstege (71, 72) sind kegelstumpfmantelförmige Flächen. Der Kegelwinkel beträgt hier 120 Winkelgrade. Die radialen Innenflächen (76) sind z.B. zylindrisch gewölbt. Im Bereich der Innenstege (71, 72) hat das Schalthebelelement (60) einen Durchmesser von z.B. 13,5 mm.

Die Rückseiten der Innenstege (71, 72), vgl. Figuren 3 und 9, weisen mittig eine plane oder schwach zylindrisch gewölbte Kontaktfläche (74) auf. Bei einer planen Kontaktfläche (74) liegt deren Ebene normal zur Mittellinie (89) des Schalthebelelements (60).

Bei der zylindrisch gewölbten Kontaktfläche (74) schneidet die Mittellinie der Zylinderwölbung senkrecht die Mittellinie (89) des Schalthebelelements (60). Nach Figur 6 beträgt der Krümmungsradius der Kontaktfläche z.B. 18 mm. Ggf. kann die Kontaktfläche (74) auch eine mindestens zweifach gewölbte Raumfläche sein, bei der sich die Kontaktfläche (74) auf einen Kontaktpunkt reduziert.

In den Umfangsrichtungen liegen neben jeder Kontaktfläche (74) eine Freifläche (77) und (78), die in Richtung der Mittellinie (89) gemessen jeweils ca. 0,5 mm hinter der Kontaktfläche (74) liegt. Nach Figur 9 läuft die untere bzw. vordere Freifläche (77) des Innensteges (72) frei aus, während die obere bzw. hintere Freifläche (78) durch eine Stegverbreiterung (79) einen Anschlag aufweist. Die Stegverbreiterung (79) reicht bis an die rückwärtige Stirnfläche des Schalthebelelements (60) heran, vgl. Figur 3.

Gemäß Figur 3 schließt sich an die vordere Freifläche (77) des Innensteges (71) eine relativ niedrige Stegverbreiterung (75) an. Diese nur an diesem Innensteg (71) vorhandene Stegverbreiterung (75), die beim Einsetzen des Werkzeughalters (90) kein Hindernis darstellt, dient bei gekuppelter Schnittstelle als Anschlag bei linksdrehenden Spindelkopf (20).

Das Schalthebelelement (60) hat zwei Querbohrungen (81, 82). Beide Querbohrungen (81, 82) sind um 90 Winkelgrade gegenüber den Mitten der Innenstege (71, 72) versetzt angeordnet. Nach Figur 3 hat die rechts dargestellte Querbohrung (82) einen Durchmesser von ca. 9 mm, während die links gezeigte Querbohrung (81) einen Durchmesser von ca. 8 mm aufweist. Ggf. können die Querbohrungen (81, 82), deren Wandungen z.B. innen gewölbt oder kegelig gekrümmt sein können, auch Ausnehmungen mit nicht kreisförmigem Querschnitt sein.

Nach der Montage sitzt das Schalthebelelement (60) so im Zwischenraum zwischen dem Spanngetriebeabschnitt (21) und dem Verriegelungsabschnitt (100), dass der Lagerzapfen (41) der Spezialsenkschraube (40) in die Querbohrung (81) hineinragt, während der Exzenterzapfen (55) der Exzenterschraube (50) in die größere Querbohrung (82) hineinragt, vg1. Figur 4. Die Zapfen (41, 55) sitzen hierbei jeweils mit minimalem Spiel in den entsprechenden Querbohrungen (81, 82). Eine Übergangspassung ist hier auch denkbar.

Gemäß Figur 4 ist die Exzenterschraube (50) genau so positioniert, dass die Mittellinie (56) des Exzenterzapfens (55) mit dem größten Abstand links der Mittellinie der Exzenterschraube (50) liegt. In diesem Fall fällt die Mittellinie (89) des Schalthebelelements (60) zumindest annähernd mit der Mittellinie (39) des Spindelkopfes (20) zusammen. Ggf. sind diese z.B. um wenige zehntel Millimeter zueinander versetzt.

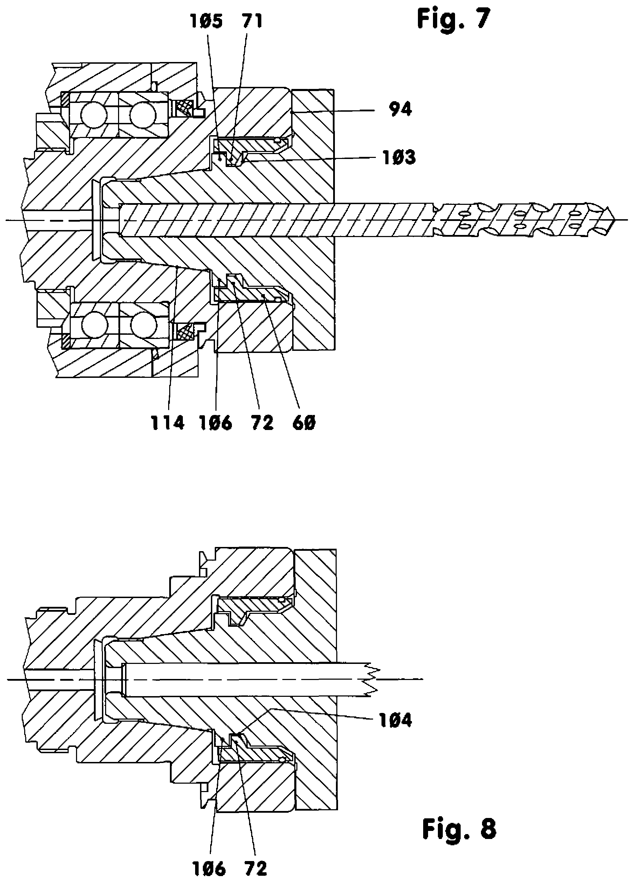

In diesem Zustand kontaktieren sich der Spindelkopf (20) und der Werkzeughalter (90) in den Montagefugen (94) und (114). Zugleich liegen die Hintergriffsstege (105, 106) des Werkzeughalters (90) auf den Kontaktflächen (74) der Innenstege (71, 72) an, vgl. Figur 7. Der Werkzeughalter (90) ist im Spindelkopf (20) spielfrei und wiederholgenau gehalten.

Wird nun zum Lösen des Werkzeughalters (90) die Exzenterschraube (50) beispielsweise durch eine halbe Linksdrehung herausgeschraubt, vgl. Figur 5, 6 und 8, wird das Schalthebelelement (60) um den fiktiven Mittelpunkt des sphärischen Lagerzapfens (41) - entgegen dem Uhrzeigerdrehsinn - verschwenkt. Wenn hier der Exzenterzapfen (55) seine Mittellinie (56) um z.B. 1,1 mm nach rechts verlagert, heben die Kontaktflächen (74) um 0,55 mm von den Hintergriffsstegen (105, 106) ab, vgl. Figur 8. Zugleich legt sich die Stirnfläche (62) des Schalthebelelements (60) an der Auswurffläche (96) des Werkzeughalters (90) an, um Letzteren aus den Montagefugen (94) und (114) zu hebeln, vgl. Figur 5. Nun kann der Werkzeughalter (90) - nach einer Drehung um 90 Winkelgrade - aus der Ausnehmung (30) des Spindelkopfes (20) herausgezogen werden.

Das Einsetzen des Werkzeughalters (90) in den Spindelkopf (20) erfolgt in umgekehrter Reihenfolge. Der Werkzeughalter (90) wird in den Spindelkopf (20) so eingeschoben, dass die Hintergriffsstege (105, 106) zwischen den Innenstegen (71, 72) hindurch hinter Letztere gelangen. Dann wird der Werkzeughalter (90) um ca. 90 Winkelgrade nach rechts gedreht. Er hält nun mit Spiel - aber verliersicher - in der Ausnehmung (30). Nun wird die Exzenterschraube (50) ca. um eine halbe Rechtsdrehung verschraubt. Dabei legen sich die beiden Kontaktflächen (74) zeitgleich an den Hintergriffsstegen (105, 106) an und ziehen gleichförmig und ohne jedes Verkanten die Montagefugen (94) und (114) zu. Der Werkzeughalter (90) sitzt nun spielfrei und wiederholgenau im Spindelkopf (20). Der in der Ringnut (85) des Schalthebelringes (60) eingelegte O-Ring (86) zentriert diesen elastisch in der Innenwandung (23) des Spindelkopfes (20).

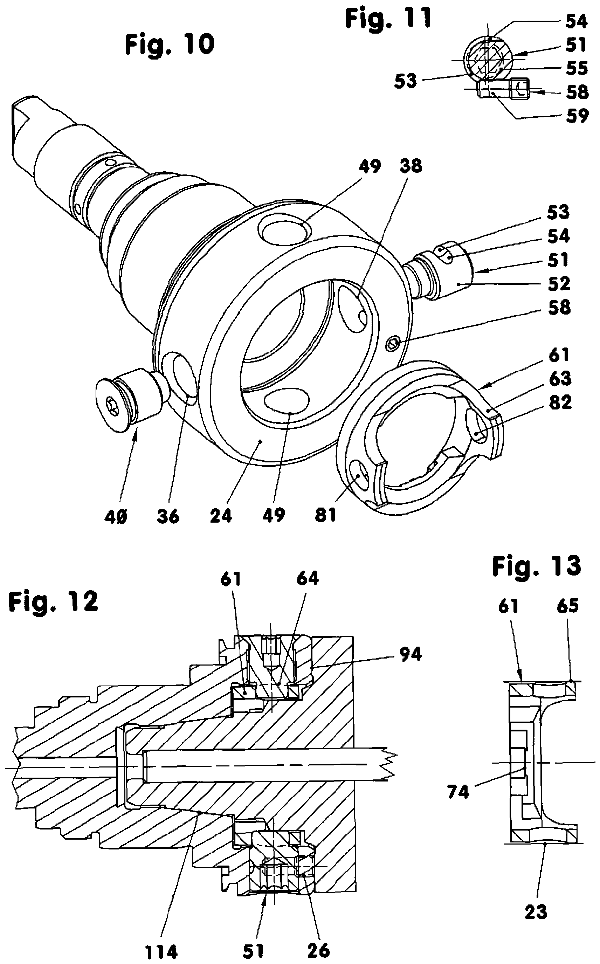

In den Figuren 10 bis 13 ist eine weitere Variante gezeigt. Bei ihr wird zum einen anstelle der Exzenterschraube (50) eine Exzenterwelle (51) verwendet. Zum anderen wird das relativ steife Schalthebelelement (60) durch eine konstruktions- und/oder materialbedingt elastischere Variante (61) ersetzt.

Die Exzenterwelle (51) hat anstelle eines Feingewindes eine glatte, zylindrische Außenfläche (52), die mit geringem Spiel oder einer Übergangspassung in einer ebenfalls glattwandigen Querbohrung (38) sitzt. Im mittleren Bereich der Außenfläche (52) ist eine Teilringnut (53) eingearbeitet. Nach Figur 11 überdeckt die Teilringnut (53) die linke Hälfte des dargestellten Querschnittes komplett. In der rechten Querschnittshälfte sind die tangentialen Teilringnutausläufe (54) dargestellt. Die Mitten der Nutgründe der Teilringnutausläufe (54) sind zueinander parallel liegende Geraden, sofern die Teilringnut (53) 180 Winkelgrade des Exzenterwellenumfangs überdeckt. Hier sind es z.B. 185 Winkelgrade. Somit schließen die Geraden der Nutgrundmitten einen Winkel von 5 Winkelgraden ein.

Die Teilringnut (53) hat in der rechten Querschnittshälfte einen kreisabschnittförmigen Querschnitt. Der Durchmesser des zu diesem Querschnitt gehörenden Kreises beträgt z.B. 4,2 mm. Die Höhe des kreisabschnittförmigen Querschnitts misst z.B. ein Viertel des Kreisdurchmessers.

Um die Exzenterwelle (51) im Spindelkopf (20) verliersicher zu halten und zugleich den Schwenkbereich der Exzenterwelle (51) zu begrenzen, befindet sich in der Stirnfläche (24) des Spindelkopfes (20) eine Längsbohrung (26) mit Gewindeabschnitt, in der ein Schwenkanschlagstift (58) eingeschraubt ist, vgl. Figur 10 und 12. Die Längsbohrung (26) schneidet die Querbohrung (38), vgl. Figur 10, genau so, dass der Zapfen (59) des Schwenkanschlagstifts (58) in die Teilringnut (53) der Exzenterwelle (51) eingreift, vgl. auch Figur 11. Der Durchmesser des Zapfens (59) ist z.B. geringfügig kleiner als 4,2 mm.

Beim Schalthebelelement (61) der Figuren 10 bis 13 sind gegenüber dem Schalthebelelement (60) der Figuren 1 bis 9 die beiden Bereiche, die vor den Innenstegen (71, 72) und zwischen den Querbohrungen (81, 82) liegen, entfernt, vgl. Figur 13. In den Bereichen der Querbohrungen (81, 82) bleiben Laschen (63) stehen. Dadurch wird das Schalthebelelement (61) im Bereich der Innenstege (71, 72) in einem definierbaren Umfang torsions- und biegeweich. Das Schalthebelelement (61) erhält die Funktion einer elastischen, ringförmigen Feder. Zum Fixieren des Werkzeughalters (90) im Spindelkopf (20) wird die Exzenterwelle (51) um die 185 Winkelgrade der Teilringnut (53) geschwenkt. Da die Exzenterwelle (51) ca. 5 Winkelgrade über den vorderen Totpunkt geschenkt wird, legt sich der entsprechende Teilringnutauslauf (54) vorgespannt - und somit sichernd - am Zapfen (59) an.

Während der Schwenkbewegung legen sich die Kontaktstellen (74) des Schalthebelelements (61) - z.B. schon nach 135 ± 15 Winkelgraden an den Hintergriffsstegen (105, 106) des Werkzeughalters (90) spielfrei an. Beim Weiterschwenken, der Restwinkel beträgt 45 ± 15 Winkelgrade, verspannt sich elastisch das Schalthebelelement (61).

Auf diese Weise können Fertigungstoleranzen der Schnittstelle zugelassen werden. Durch die Elastizität des Schalthebelelements (61) ergibt sich immer eine bestimmte, minimal erforderliche Restklemmkraft in den Montagefugen (94) und (114). Zugleich wird durch die Elastizität auch die Maximalklemmkraft begrenzt.

Nach Figur 12 ist das Schalthebelelement (61) alternativ im Bereich der Laschen (63) ballig ausgeführt, vgl. gestrichelte Balligkeitskontur (64). Die Krümmung der Balligkeitskontur (64) entspricht dem Innendurchmesser der Innenwandung (23) des Spanngetriebeabschnitts (21). Damit zentriert sich das Schalthebelelement (61) über die Laschen (63) im Spanngetriebeabschnitt (21) entlang der Mittellinien der Querbohrungen (81, 82). Während des Verdrehens der Exzenterwelle (51) werden die Laschen (63) kurzzeitig elastisch nach innen gebogen.

Gemäß Figur 13 wird anstelle einer zentralen Balligkeitskontur (64) ein schmaler ballig gewölbter Klemmsteg (65) zum Zentrieren verwendet. Er befindet sich jeweils am vorderen Rand der Laschen (63). Auch der Klemmsteg (65) führt zu einem elastischen Verspannen der Laschen (63) beim Lüften der Montagefugen (94) und (114).

Der Spindelkopf (20) nach Figur 10 weist zwischen der Gewindebohrung (36) und der Querbohrung (38) jeweils eine weitere Gewindebohrung (49) auf. Letztere hat beispielsweise jeweils die gleiche geometrische Gestalt wie die Gewindebohrung (36).

Ggf. können statt einer Exzenterschraube (50)/Exzenterwelle (51) und einer Spezialsenkschraube (40) auch zwei

Exzenterschrauben (50) oder zwei Exzenterwellen (51) verwendet werden. In diesen Fällen verdoppelt sich der Gesamthub des Schalthebelelements (60, 61).

### Bezugszeichenliste:

- 10: Gehäuse des Werkzeugaggregats
- 11: Schulterkugellager
- 12: Wellenmutter
- 13: Deckel
- 14: Lippendichtung
- 15: Stirnfläche
- 16: Steg
- 17: Labyrinthspalt, Spaltdichtung
- 18: Deckelschrauben
- 19: Endstück

- 20: Spindelkopf
- 21: Spanngetriebeabschnitt
- 22: Außenwandung
- 23: Innenwandung
- 24: Stirnfläche; Anlagefläche, Kontaktstelle
- 25: Spindelkopfschulter
- 26: Längsbohrung für Schwenkanschlagstift
- 27: Bundnut
- 28: Innenstirnfläche, vorn
- 29: Innenstirnfläche, hinten

- 30: Ausnehmung, zentral
- 31: Abschnitt, kegelstumpfmantelförmig
- 32: Bohrung
- 33: Hintergriffsaufweitung, zylindrisch
- 34: Hintergriffsaufweitung, konisch
- 35: Zuführbohrung, Schmiermittelzuführbohrung
- 36: Gewindebohrung für Spezialsenkschraube
- 37: Gewindebohrung für Exzenterschraube
- 38: Querbohrung, zylindrisch
- 39: Mittellinie des Spindelkopfes

- 40: Spezialsenkschraube
- 41: Lagerzapfen, Zapfen
- 42: Werkzeugausnehmung
- 49: Gewindebohrung

- 50: Exzenterschraube
- 51: Exzenterwelle
- 52: Außenfläche, radial
- 53: Teilringnut
- 54: Teilringnutausläufe
- 55: Exzenterzapfen, Zapfen
- 56: Mittellinie von (55)
- 57: Werkzeugausnehmung
- 58: Schwenkanschlagstift
- 59: Zapfen

- 60: Schalthebelelement
- 61: Schalthebelelement mit Laschen
- 62: Stirnfläche, vorn
- 63: Laschen
- 64: Balligkeitskontur
- 65: Klemmsteg
- 66: Bohrung
- 67: Fase

- 71, 72: Innenstege, Anlenkelemente
- 73: Vorderflanken
- 74: Kontaktflächen, ggf. Kontaktstellen
- 75: Stegverbreiterung, vorn in (71), Anschlag
- 76: Innenflächen, radial
- 77: Freiflächen, vorn
- 78: Freiflächen, hinten
- 79: Stegverbreiterungen, hinten, Anschläge

- 81: Querbohrung, klein
- 82: Querbohrung, groß

- 85: Ringnut
- 86: O-Ring
- 89: Mittellinie

- 90: Werkzeughalter
- 91: Flanschabschnitt
- 92: Bohrung für Werkzeug

- 93: Stirnfläche, rückseitig; Anlagefläche, Kontaktstelle
- 94: Montagefuge, zweite
- 95: Umlaufringnut
- 96: Auswurffläche

- 100: Verriegelungsabschnitt
- 101: Fase
- 102: Abschnitt, zylindrisch
- 103: Ringnut
- 104: Nutgrund, zylindrisch
- 105, 106: Hintergriffsstege, Hintergriffselemente
- 107: Seitenflanken

- 110: Konusabschnitt; Abschnitt, kegelstumpfförmig
- 114: Montagefuge, erste
- 117: Endabschnitt

- 120: Werkzeug; Spiralbohrer, z.B. innengekühlt
- 121: Kühlschmierstoffkanäle

## Patentansprüche

1. Schnittstelle aus einer ersten - ein Werkzeug oder einen Werkzeughalter haltende - Baugruppe (20) und einer zweiten - das Werkzeug oder den Werkzeughalter tragende - Baugruppe (90),
- wobei die erste Baugruppe (20) zum einen eine Ausnehmung (30) hat, die mindestens einen kegelstumpfmantelförmigen Abschnitt (31) hat und zum anderen eine in axialer Richtung - in Richtung der zweiten Baugruppe (90) - wirkende Anlagefläche (24) oder Kontaktstelle aufweist und
- wobei die zweite Baugruppe (90) zum einen einen kegel- oder kegelstumpfförmigen Abschnitt (110) zur Anlage am kegelstumpfmantelförmigen Abschnitt (31) der ersten Baugruppe (20) hat und zum zweiten mindestens eine in axialer Richtung wirkende Kontaktstelle oder Anlagefläche (93) zur Kontaktierung der Anlagefläche (24) oder Kontaktstelle der ersten Baugruppe (20) aufweist,
**dadurch gekennzeichnet,**
- **dass** in der Ausnehmung (30) der ersten Baugruppe (20) ein Schalthebelelement (60, 61) längsverschiebbar oder schwenkbar angeordnet ist,
- **dass** die erste Baugruppe (20) zur Lagerung des Schalthebelelements (60, 61) mindestens zwei Zapfen (41, 55) aufweist, wobei mindestens ein Zapfen (41) ortsfest an der ersten Baugruppe (20) angeordnet ist, während mindestens mindestens ein Zapfen (55) - exzentrisch gelagert - schwenkbewegbar ist,
- **dass** das Schalthebelelement (60, 61) mindestens ein - die zweite Baugruppe (90) anlenkendes - Anlenkelement (71, 72) hat und
- **dass** die zweite Baugruppe (90) mindestens ein Hintergriffselement (105, 106) hat, das durch eine Schwenkbewegung der zweiten Baugruppe (90) hinter das Anlenkelement (71, 72) des Schalthebelelements (60, 61) bringbar ist.

2. Schnittstelle gemäß Anspruch 1, **dadurch gekennzeichnet, dass** die erste Baugruppe (20) ein Spindelkopf ist, während die zweite Baugruppe (90) ein Werkzeughalter ist.

3. Schnittstelle gemäß Anspruch 1, **dadurch gekennzeichnet, dass** das Schalthebelelement (60, 61) ringförmig gestaltet ist und mindestens zwei Querbohrungen (81, 82) aufweist.

4. Schnittstelle gemäß Anspruch 1, **dadurch gekennzeichnet, dass** in der ersten Baugruppe (20) die Mittellinie des Zapfens (41) und die Schwenkachse des Zapfens (55) zueinander fluchten.

5. Schnittstelle gemäß Anspruch 1, **dadurch gekennzeichnet, dass** die Anlenkelemente (71, 72) des Schalthebelelements (60, 61) radial nach innen abstehende Innenstege sind.

6. Schnittstelle gemäß Anspruch 1, **dadurch gekennzeichnet, dass** die Innenstege (71, 72) erhabene Kontaktstellen oder Kontaktflächen (74) aufweisen.

7. Schnittstelle gemäß Anspruch 1, **dadurch gekennzeichnet, dass** die Hintergriffselemente (105, 106) der zweiten Baugruppe (90) radial nach außen abstehende Hintergriffsstege sind.

## Claims

1. An interface adapter comprising first and second modules (20; 90), said first module (20) holding a tool or a tool holder and said second module (90) holding the tool or the tool holder, with
- the first module (20) having therein, firstly, a recess (30) comprising at least one frustroconical section (31) and having therein, secondly, an engagement surface (24) or contact site acting in an axial direction, i.e. towards the second module (90), and
- the second module (90) having, firstly, a conical or frustroconical section (110) for engaging the frustroconical section (31) of the first module (20) and, secondly, at least one contact site or engagement surface (93) acting in an axial direction for contacting the engagement surface (24) or said contact site of the first module (20),
**characterized in that**
- the recess (30) of the first module (20) has arranged therein a switching lever element (60, 61) in a longitudinally displaceable or pivotable relationship; **in that**
- the first module (20) includes for mounting the switching lever elements (60, 61) at least two pegs (41, 55), with at least one peg (41) being arranged on first module (20) in a stationary relationship thereto and at least one peg (55) being mounted for pivotal motion; **in that**
- the switching lever element (60, 61) has at least one link element (71, 72) linking the second module (90); and **in that**
- the second module (90) has at least one grip-behind element (105, 106) adapted to be moved behind the link element (71, 72) of the switching lever element (90) by a pivoting movement of second module (90).

2. Interface adapter as claimed in claim 1, **characterized in that** he first module (20) comprises a spindle head while the second module (90) comprises a tool holder.

3. Interface adapter as claimed in claim m1, **characterized in that** the switching lever element (60, 61) is configured to have a ring shape and has at least two transverse bores (81, 82) therethrough.

4. Interface adapter as claimed in claim 1, **characterized in that** in the first module (20) the center line of the peg (41) and the pivoting axis of the peg (55) are aligned with each other.

5. Interface adapter as claimed in claim 1, **characterized in that** the link elements (71, 72) of switching lever element (60, 61) are radially inwardly protruding internal lands.

6. Interface adapter as claimed in claim 1, **characterized in that** the internal lands (71, 72) comprise raised contact sites or contact areas (74).

7. Interface adapter as claimed in claim 1, **characterized in that** the grip-behind elements (105, 106) of the second module (9C) comprise radially outwardly protruding grip-behind lands.

## Revendications

1. Interface composée d'un premier module (20) portant un outil ou un porte-outil et d'un deuxième module (90) portant l'outil ou le porte-outil
- le premier module (20) présentant d'une part un évidement (30) qui possède au moins une partie en forme de surface tronconique (31) et d'autre part une surface d'appui (24) ou un point de contact agissant dans le sens axial, en direction du deuxième module (90), et
- le deuxième module (90) présentant d'une part une partie en forme conique ou tronconique (110) destinée à s'appuyer sur la partie en forme de surface tronconique (31) du premier module (20) et d'autre part au moins un point de contact ou une surface d'appui (93) agissant dans le sens axial, pour contacter la surface d'appui (24) ou le point de contact du premier module (20),
**caractérisé en ce**
- **qu'**un élément levier de commande (60,61) est disposé dans l'évidement (30) de manière déplaçable longitudinalement ou de manière pivotante,
- **que** le premier module (20) présente au moins deux tenons (41, 55) pour le logement de l'élément levier de commande (60, 61), au moins un tenon (41) étant monté fixe sur le premier module (20) et au moins un tenon (55), monté de façon excentrique, étant mobile de manière pivotante,
- **que** l'élément levier de commande (60, 61) présente au moins un élément d'articulation (71, 72) reliant le deuxième module (90) et
- **que** le deuxième module (90) présente au moins un élément d'engagement par l'arrière (105, 106) qui peut être amené derrière l'élément d'articulation (71, 72) de l'élément levier de commande (60, 61) par un mouvement de pivotement du deuxième module (90).

2. Interface selon la revendication 1, **caractérisée** en que le premier module (20) est une tête de broche alors que le deuxième module (90) est un porte-outil.

3. Interface selon la revendication 1, **caractérisée** en que l'élément levier de commande (60, 61) a une forme annulaire et présente au moins deux perçages transversaux (81, 82).

4. Interface selon la revendication 2, **caractérisée** en que dans le premier module (20) l'axe central du tenon (41) et l'axe de pivotement du tenon (55) sont alignés l'un avec l'autre.

5. Interface selon la revendication 1, **caractérisée** en que les éléments d'articulation (71, 72) de l'élément levier de commande (60, 61) sont des saillies intérieures qui s'étendent radialement vers l'intérieur.

6. Interface selon la revendication 1, **caractérisée** en que les saillies intérieures (71, 72) présentent des points ou des surfaces de contact (74) surélevés.

7. Interface selon la revendication 1, **caractérisée** en que les éléments d'engagement par l'arrière (105, 106) du deuxième module (90) sont des saillies d'engagement par l'arrière qui s'étendent radialement vers l'extérieur.
